# EUROPEAN PATENT APPLICATION

(11) **EP 4 633 239 A1**
(43) Date of publication of application: **15.10.2025**
(21) Application number: 23921454.7
(22) Date of filing: 23.08.2023
(51) Int. Cl.: H04W 36/18, H04W 36/02, H04L 67/141, H04W 36/00, H04W 40/36, H04W 76/11, H04W 88/18

(54) **METHOD AND APPARATUS FOR RELOCATING SERVER THAT SERVES APPLICATION IN WIRELESS COMMUNICATION SYSTEM**

(30) Priority: 07.02.2023 KR 20230016424
(71) Applicant: Samsung Electronics Co., Ltd., Suwon-si, Gyeonggi-do 16677 (KR)
(72) Inventor: CHA, Jiyoung, Suwon-si Gyeonggi-do 16677 (KR); KIM, Sunhyun, Suwon-si Gyeonggi-do 16677 (KR); LEE, Sangho, Suwon-si Gyeonggi-do 16677 (KR); KIM, Dongmyung, Suwon-si Gyeonggi-do 16677 (KR); CHOI, Jinho, Suwon-si Gyeonggi-do 16677 (KR)
(74) Representative: Nederlandsch Octrooibureau
(86) International application number: PCT/KR2023/012448
(87) International publication number: WO 2024/167080

(57) **Abstract**

The present disclosure relates to a 5G or 6G communication system for supporting a higher data transmission rate than a 4G communication system such as LTE. Particularly, a method performed by a target base station in a wireless communication system, according to various embodiments of the present disclosure, comprises the steps of: receiving a handover request message from a source base station; on the basis of the handover request message, identifying, as a candidate for a target computing function (CF), a CF identified by a data network access identifier (DNAI) associated with a target base station; from among candidates for the target CF, identifying, as a target CF, a candidate for the target CF corresponding to each data network (DN) related to distributed processing of relocation of an application of a UE performing a handover; and transmitting, to the source base station, a handover request ACK message including information regarding the identified target CF, wherein the target CF may connect a network to an application server that serves the application of the UE performing the handover.

## Description

### [Technical Field]

The disclosure relates to a wireless communication system and, more particularly, to a method and a device for supporting relocation of an application server that provides service to an application of a terminal performing handover in the wireless communication system.

### [Background Art]

A review of the development of wireless communication from generation to generation shows that the development has mostly been directed to technologies for services targeting humans, such as voice-based services, multimedia services, and data services. It is expected that connected devices which are exponentially increasing after commercialization of 5th generation (5G) communication systems will be connected to communication networks. Examples of things connected to networks may include vehicles, robots, drones, home appliances, displays, smart sensors installed in various infrastructures, construction machines, factory equipment, and the like. Mobile devices are expected to evolve into various form factors, such as augmented reality glasses, virtual reality headsets, and hologram devices. In order to provide various services by connecting hundreds of billions of devices and things in the 6th generation (6G) era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (i.e., 1,000 giga)-level bps and a radio latency of 100 µsec. That is, 6G communication systems will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance, that is, coverage, will become more crucial. It is necessary to develop, as major technologies for securing the coverage, multiantenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Specifically, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

### [Disclosure of Invention]

### [Technical Problem]

Various embodiments disclosed herein provide a method and a device for supporting relocation of an application server that provides service to an application of a terminal performing handover in the wireless communication system.

### [Solution to Problem]

According to various embodiments of the disclosure, a method performed by a target base station in a wireless communication system may include receiving a handover request message from a source base station, determining, as target CF candidates, computing functions (CFs) identified by data network access identifiers (DNAIs) associated with the target base station, based on the handover request message, determining, as a target CF, a target CF candidate corresponding to each data network (DN) related to distributed processing of application relocation of a terminal (UE) performing handover among the target CF candidates, and transmitting a handover request ACK message including information on the determined target CF to the source base station, wherein the target CF connects a network with an application server providing service for an application of the terminal performing handover.

According to various embodiments of the disclosure, a device of a target base station in a wireless communication system may include a communication unit and a controller, wherein the controller is configured to perform control to receive a handover request message from a source base station, determine, as target CF candidates, computing functions (CFs) identified by data network access identifiers (DNAIs) associated with the target base station, based on the handover request message, determine, as a target CF, a target CF candidate corresponding to each data network (DN) related to distributed processing of application relocation information of a terminal (UE) performing handover among the target CF candidates, and transmit a handover request ACK message including information on the determined target CF to the source base station, and wherein the target CF connects a network with an application server providing service for an application of the terminal performing handover.

A method performed by a source base station in a wireless communication system according to the disclosure may include transmitting a handover request message to a target base station, receiving a handover request ACK message including information on a determined target computing function (CF) from the target base station, and based on the handover request ACK message, transferring the information on the target CF to a source CF which is associated with the source base station and corresponds to a data network name (DNN) related to distributed processing of application relocation of a terminal (UE) performing handover and associated with the target CF.

A device of a source base station in a wireless communication system according to the disclosure may include a communication unit, and a controller, wherein the controller is configured to perform control to transmit a handover request message to a target base station, receive a handover request ACK message including information on a determined target computing function (CF) from the target base station, and based on the handover request ACK message, transfer the information on the target CF to a source CF which is associated with the source base station and corresponds to a data network name (DNN) related to distributed processing of application relocation of a terminal (UE) performing handover and associated with the target CF.

### [Brief Description of Drawings]

FIG. 1 illustrates a distributed wireless network environment in a wireless communication system according to an embodiment of the disclosure.
FIG. 2 illustrates a wireless network environment of a moving terminal in a wireless communication system according to an embodiment of the disclosure.
FIG. 3 is a flowchart illustrating an operation for relocating a server that provides service for an application of a terminal performing handover for a base station according to an embodiment of the disclosure.
FIG. 4 is a flowchart illustrating an operation of determining a target computing function (CF) according to an embodiment of the disclosure.
FIG. 5 is a flowchart illustrating an operation of transferring information on determination of a target CF according to an embodiment of the disclosure.
FIG. 6 is a flowchart illustrating an operation of a CF supporting relocation of an application according to an embodiment of the disclosure.
FIG. 7 is a flowchart illustrating an operation of reporting that supporting of relocation of an application has been completed according to an embodiment of the disclosure.
FIG. 8 is a flowchart illustrating an operation of supporting relocation of a server that provides service for an application of a terminal performing handover according to an embodiment of the disclosure.
FIG. 9 illustrates an operation of a target base station according to an embodiment of the disclosure.
FIG. 10 illustrates an operation of a source base station according to an embodiment of the disclosure.
FIG. 11 illustrates a structure of a base station according to an embodiment of the disclosure.
FIG. 12 illustrates a structure of a UE according to an embodiment of the disclosure.
FIG. 13 illustrates a structure of a server according to an embodiment of the disclosure.

With regard to the description of the drawings, the same or like reference signs may be used to designate the same or like elements.

### [Mode for the Invention]

Various aspects of the claimed subject matter are now described with reference to the drawings, wherein like reference numerals are used to refer to like elements throughout. In the following description, for purposes of explanation, numerous specific details are set forth in order to provide a thorough understanding of one or more aspects. It may be apparent, however, that such aspect(s) may be practiced without these specific details.

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

In the following description, terms referring to signals (e.g., message, signal, signaling, sequence, and stream), terms referring to resources (e.g., symbol, slot, subframe, radio frame (RF), subcarrier, resource element (RE), resource block (RB), bandwidth part (BWP), and occasion), terms for operations (e.g., step, method, process, and procedure), terms referring to data (e.g., information, parameter, variable, value, bit, symbol, and codeword), terms referring to channels, terms referring to control information (e.g., downlink control information (DCI), medium access control codeword element (MAC CE), and radio access control (RRC) signaling), terms referring to network entities, terms referring to device elements, and the like are illustratively used for the sake of convenience. Therefore, the disclosure is not limited by the terms as described below, and other terms referring to subjects having equivalent technical meanings may be used.

Various aspects are described herein in connection with a wireless terminal and/or a base station. A wireless terminal may refer to a device providing voice and/or data connectivity to a user. The wireless terminal may be connected to a computing device such as a laptop computer or desktop computer, or it can be a self - contained device such as a personal digital assistant (PDA). The wireless terminal may also be called a system, a subscriber unit, a subscriber station, mobile station, mobile, remote station, access point, remote terminal, access terminal, user terminal, user agent, user device, or user equipment. A wireless terminal may be a subscriber station, a wireless device, a cellular telephone, a PCS telephone, a cordless telephone, a session initiation protocol (SIP) phone, a wireless local loop (WLL) station, a personal digital assistant (PDA), a handheld device having wireless connection capability, or other processing device connected to a wireless modem. A base station (e.g., access point) may refer to a device in an access network that communicates over the air-interface, through one or more sectors, with wireless terminals. The base station may act as a router between the wireless terminal and the rest of the access network, which can include an Internet Protocol (IP) network, by converting received air-interface frames to IP packets. The base station also coordinates management of attributes for the air interface.

A data network name (DNN) related to the distributed processing of the relocation of an application server that provides service for an application of a UE performing handover, as described in the disclosure, may refer to a data network name (hereinafter, DNN) corresponding to an application for which computing servers or application servers are distributed in units of individual cells or in units of multiple cells according to the requirement for ultra-high capacity and ultra-low latency, and thus relocation of the application needs to be distributed and processed in units of cells. However, even if servers are not distributed in units of individual cells or in units of multiple cells, when relocation of an application needs to be performed concurrently with a UE's handover, a DNN of the application required to be relocated may also be regarded as a DNN associated with relocation of an application server that provides service for the application of the UE performing the handover.

A computing function (CF) described in the disclosure may refer to an entity or node that interfaces (or connects, accesses, or communicates) an application server (or computing server or edge application server (EAS)) and a network in order to exchange information between the server and the network. In addition, the CF may refer to an entity or node that interfaces an application server providing service for an application of a UE performing handover and a network. The CF may also refer to an application server providing service for an application of a UE performing handover. That is, the application server itself may act as a CF to exchange information with network functions (NFs) within the network.

A computing exposure function (CEF) entity described in the disclosure may refer to an NF that exposes the capabilities of the CF and the server and performs translation between the CF and a network entity, thereby interfacing (or connecting, accessing, or communicating) the network and the CF. The CEF entity may expose information related to the UE according to the movement of the UE. In an example, when the CF is in an untrusted state, the server may communicate with an internal network entity through the CEF.

In addition, an application of a UE described in the disclosure is an application provided by a third party and may refer to a client application program executed on the UE for a specific application service. Multiple application may be executed on the UE.

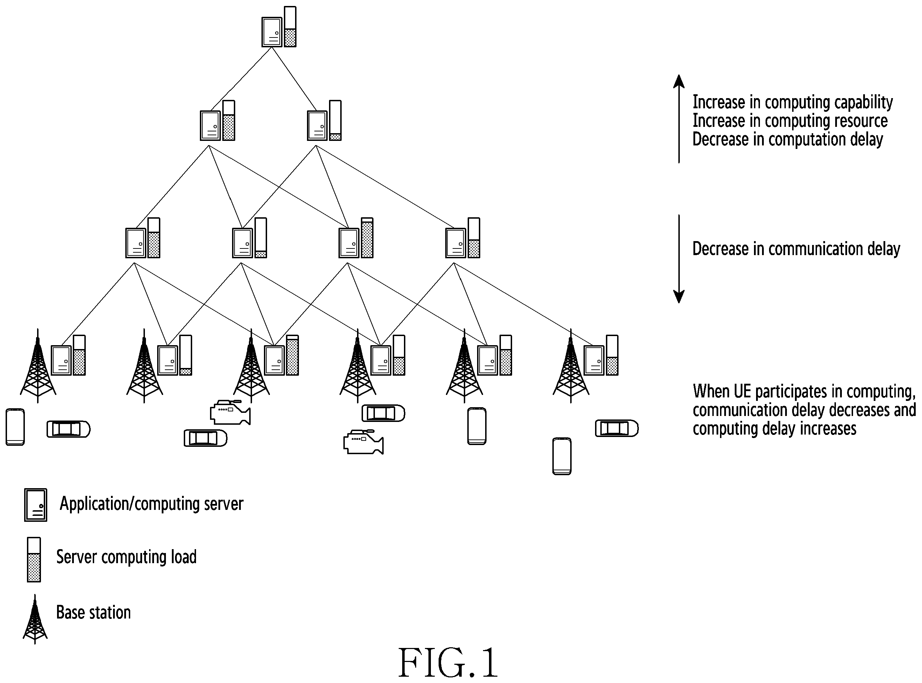

FIG. 1 illustrates a distributed wireless network environment in a wireless communication system according to an embodiment of the disclosure.

Referring to FIG. 1, some networks/systems may be configured as network environments in a distributed manner each including multiple application/computing servers and multiple base stations. Such network environments may be referred to as distributed network environments or distributed computing environments. A distributed computing environment may refer to an environment in which computing resources are distributed in the network. In a distributed computing environment, computing resources having different characteristics may be distributed in the network, and a UE may access an application provided from computing close to the UE through a radio access network (RAN) and a locally distributed user plane function (UPF) entity.

Meanwhile, a network having a distributed computing environment may be required to support a service to an application (e.g., holograms, XR, deep neural networks, and V2X) that demands a network environment of ultra-high capacity and ultra-low latency. In an example, the application that demands a network environment of ultra-high capacity and ultra-low latency may be an application that requires computing beyond the capacity of the UE or uses high-performance AI.

Hereinafter, for convenience of description, some of the terms and names defined in a 3rd generation partnership project long term evolution (3GPP) specification may be used. However, the disclosure is not limited by the terms and names, and the same may be applied to systems following other specifications.

Referring to FIG. 1, as the layer goes higher from the center, the computing capability and the capacity of computing resources may increase, and computing may be performed more quickly, thereby reducing computing delay.

When a server is located close to a user equipment (UE), such as at a cell site, communication delay may be reduced.

Meanwhile, when the UE participates in computing, the UE is directly involved in the computing. Therefore, communication delay for transmitting and receiving data requiring computing to and from a computing server may be reduced or eliminated. However, computing delay may increase due to low computing capability.

As such, in a distributed computing environment, multiple different servers having various computing capabilities, computing resource utilization statuses, computing capacities, and communication characteristics (e.g., communication delay depending on distance) may be distributed across the network. Therefore, there is a growing need for the network to support a dynamic computing service in a distributed computing environment.

For a dynamic computing service, a procedure of relocating a server that provides service for an application may be performed after a handover procedure caused by the UE's inter-cell movement is completed. When a UE moves from a previously located cell to another cell, a handover procedure caused by inter-cell movement is performed, and a core network having received a message indicating that the handover procedure has been performed may select a user plane function (UPF) entity to be changed. A UPF (or a network entity capable of performing the UPF) may serve as a gateway that transfers transmitted and received packets. The UPF may enable low-latency transmission by transferring a data packet directly to an edge data network without passing through the Internet. Meanwhile, the UPF may also be connected to a data network that is connected through the Internet. In a distributed computing environment, not only servers but also UPF entities may be distributed. The core network may collect information on multiple distributed UPF entities, and perform relocation of an application function (AF) in order to match a server to which the UE is to move with a UPF entity. The core network may select an AF associated with a server capable of providing service to the moving UE and the area of the cell to which the UE is to move, and perform relocation of the AF. Subsequently, the core network may select an edge application server (EAS) associated with the relocated AF and perform relocation of the EAS. The UPF entity having received relocation information of the AF and EAS may configure a UPF entity for interfacing (or connecting, accessing, or communicating) with the server to which the UE is to move (UPF configuration).

Such a procedure of relocating a server for providing service for an application according to the movement of a UE is performed sequentially and after a handover procedure of the UE, and thus may result in significant time delay. That is, the conventional procedure of relocating a server for providing service for an application is performed at an upper layer of the core network and in a sequential manner, which may cause communication delay.

In the disclosure, a method and a device for performing a handover procedure of a UE and a procedure related to relocation of a server providing service for an application of the UE simultaneously or in parallel are described.

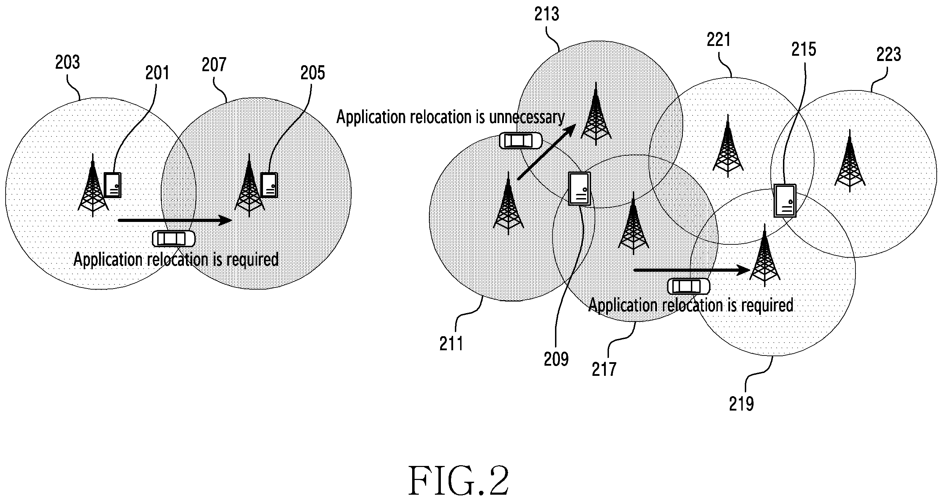

FIG. 2 illustrates a wireless network environment of a moving UE in a wireless communication system according to an embodiment of the disclosure. In particular, FIG. 2 illustrates a network environment, among the distributed computing environments shown in FIG. 1, in which application servers are deployed down to a cell site.

In a distributed computing environment where each computing server has a small coverage, when a UE moves, it may be necessary that while a handover procedure caused by inter-cell movement is performed, the relocation of an application is simultaneously performed according to the requirement of an application server for ultra-low latency and ultra-high capacity.

According to an embodiment of the disclosure, while a UE receives a service from a first server 201 supporting a service within a first cell 203, when the UE moves to an area of a second cell 207, the UE or an application of the UE may need to receive a service from a second server 205 located in the second cell 207. For example, when the UE moves from the area of the first cell 203 to the area of the second cell, very low communication delay and computing delay, or high-capacity computing may be required to the extent that the UE needs to receive the service from the second server 205 instead of the first server 201. In this case, the moving UE may require a network environment where not only performing of a handover procedure is possible but also relocation of the application is supportable. The application relocation may mean a case where, as the UE moves, the application of the UE needs to receive the service from a server to which the UE is to move.

According to an embodiment of the disclosure, even when one cell does not correspond to one server, the UE may require a network environment where relocation of the application is supportable. For example, in a case where third to fifth cells 211, 213, and 217 provide service to the UE through a third server 209, and sixth to eighth cells 219, 221, and 223 provide service to the UE through a fourth server 215, when the UE moves from the area of the third to fifth cells 211, 213, and 217 to the area of the sixth to eighth cells 219, 221, and 223, the UE may require a network environment where the server supporting a service to an application is relocated from the third server 209 to the fourth server 215.

According to an embodiment of the disclosure, even when the UE performs inter-cell movement, if all the cells share the same server, application relocation may not be required. For example, when the UE moves from the third cell 211 to the fourth cell 213 or the fifth cell 217, all of which share the third server 209, the UE performs a handover procedure, but, since the server remains unchanged as the third server, relocation of the server supporting the application may not be required.

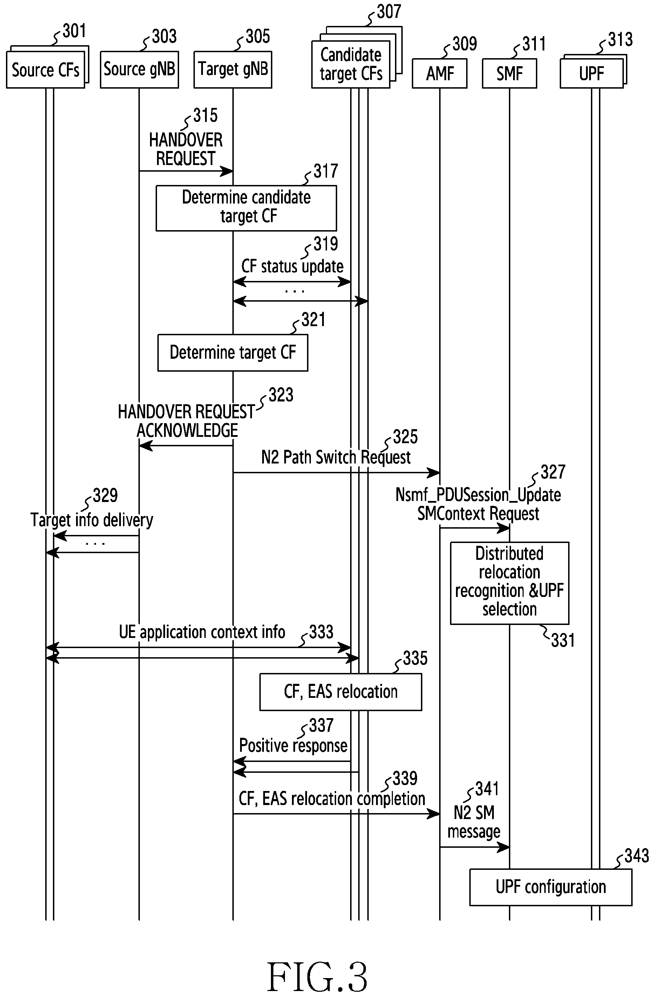

FIG. 3 is a flowchart illustrating an operation for relocating a server that provides service for an application of a UE performing handover for a base station according to an embodiment of the disclosure.

Referring to FIG. 3, a procedure for relocating a server providing service for an application in accordance with movement of a UE may be performed simultaneously with a handover procedure of the UE. FIG. 3 illustrates a case in which relocation of a server providing service for an application of a UE performing handover is required as the UE moves, based on FIG. 2.

In operation 315, when a UE moves from a source cell to a target cell, a source base station 303 may transmit a handover request message (HANDOVER REQUEST message) to a target base station 305. The handover request message may include information on a data network (DN) related to distributed processing of relocation of an application of the UE performing handover. The information on the DN described in the disclosure may include, for example, a data network name (DNN) related to distributed processing of relocation of the application of the UE performing handover, and a data network access identifier (DNAI) for each DNN. In addition, the handover request message may include protocol data unit (PDU) session ID information of the UE performing handover. However, the handover request message is not limited thereto and may include various types of information.

In operation 317, the target base station 305 having received the handover request message from the source base station 303 may determine a candidate of a target computing function (CF) that interfaces (or connects, accesses, or communicates) the application and a server providing service for the application of the UE performing handover.

A cell corresponding to a specific base station may belong to a service area of an application server identified by a specific DNAI. The target base station 305 may determine, based on the received handover request message, whether a DNAI associated with the source base station 303 is the same as a DNAI associated with the target base station 305 with respect to each DNN related to distributed processing of relocation of the application of the UE, to determine whether to perform a procedure of determining the target CF.

When the DNAI associated with the source base station 303 is not the same as the DNAI associated with the target base station 305 with respect to each DNN related to distributed processing of relocation of the application of the UE, the target base station 305 may determine to perform a procedure of determining the target CF. When the target base station 305 determines to perform a procedure of determining the target CF, the target base station 305 may determine, as a candidate of the target CF, a CF identified by the DNAI associated with the target base station 305, which is not identical to the DNAI associated with the source base station 303 with respect to each DNN related to distributed processing of relocation of the application of the UE.

On the other hand, when the DNAI associated with the source base station 303 is the same as the DNAI associated with the target base station 305 with respect to each DNN related to distributed processing of relocation of the application of the UE, the target base station 305 may determine not to perform a procedure of determining the target CF. This may indicate that the source base station 303 and the target base station 305 are within a service area of the same application server. In a case where the DNAI associated with the source base station 303 is the same as the DNAI associated with the target base station 305 with respect to each DNN related to distributed processing of relocation of the application of the UE, since the same UPF entity and application server as those used before the UE performs handover are usable without changing the UPF entity or DNAI, the target CF may not be determined. At this time, the target base station 305 may store information indicating that the DNAIs associated with the source base station 303 and the target base station 305 are identical for each DNN related to the distributed processing of application relocation of the UE, and may include information including an indication that the DNAIs are identical, in an N2 path switch request message transmitted to an AMF entity 309 in operation 325. However, the N2 path switch request message is not limited thereto and may include various types of information.

In operation 319, the target base station 305 may receive information related to application relocation from the candidates of the target CF determined in operation 317.

The target base station 305 may transmit information related to distributed processing of application relocation of the UE performing handover to the candidates 307 of the target CF. The candidates 307 of the target CF having received a message from the target base station 305 may transmit, to the target base station, information related to distributed processing of application relocation of the UE for an application server (or computing server, or edge application server (EAS)) which each CF interfaces (or connects, accesses, or communicates).

According to an embodiment of the disclosure, the information related to distributed processing of application relocation transmitted by the candidates 307 of the target CF may include the following pieces of information.
- Information on currently available computing resources and information on admission availability
- A DNN corresponding to an application server which each of the candidates of the target CF interfaces
- A DNAI specifying the application server which each of the candidates of the target CF interfaces

The information on admission availability may include information relating to whether a computing/application server connected to each of the candidates of the target CF lacks available resources for providing service for the application of the UE performing handover, or whether the server is able to additionally support a new UE.

The target base station 305 may update the states of the target CFs, based on the received information.

However, the information related to application relocation is not limited thereto and may include various types of information.

In operation 321, the target base station 305 may determine a target CF that interfaces (or connects, accesses, or communicates) the application and a server providing service for the application of the UE performing handover among the target CF candidates 307, based on the received information related to application relocation of the target CF candidates 307.

According to an embodiment of the disclosure, if it is identified that a particular server is unable to provide service for the application of the UE performing handover, the target base station 305 may not determine a target CF candidate corresponding to the particular server as the target CF. For example, if admission availability information indicating that a particular server lacks available resources for providing service for the application of the UE performing handover or is unable to additionally support a new UE is secured, the target base station may not determine a target CF candidate corresponding to the particular server as the target CF.

In operation 323, the target base station 305 may transmit a handover request ACK message (HANDOVER REQUEST ACKNOWLEDGE message) for the handover of the UE to the source base station 303. The handover request ACK message may include the following information.
- Information capable of indicating a DNN related to distributed processing of application relocation, which corresponds to the target CF
- Information on an application server (or computing server or edge application server (EAS)) which the target CF interfaces, and information indicating the server
- Internal network address information of the target CF
- External network Internet address information of the application server (or computing server or edge application server (EAS)) which the target CF interfaces

The information capable of indicating a DNN related to distributed processing of application relocation, which corresponds to the target CF may be included in the handover request ACK message as a parameter called DNN. Also, the information on an application server which the target CF interfaces, and the information indicating the server may be included in the handover request ACK message as a parameter called Target DNAI.

However, the handover request ACK is not limited thereto and may include various types of information.

An operation of the source base station 303 having received the handover request ACK message will be described in operation 329.

In operation 325, the target base station 305 may transmit an N2 path switch request message to the AMF entity 309. The N2 path switch request message may include a DNAI together with a PDU session ID for only a DNN for which the target CF is selected among DNNs related to distributed processing of application relocation, in which a PDU session of the UE performing handover is established. For a PDU session of a DNN related to distributed processing of application relocation, for which the target CF is not selected, and a PDU session of a DNN not related to application relocation, the target base station 305 may include only the PDU session IDs in the N2 path switch request.

According to an embodiment of the disclosure, based on the information, stored in operation 371, indicating that the DNAI associated with the source base station 303 and the DNAI associated with the target base station 305 are identical for each DNN related to the distributed processing of application relocation of the UE, the target base station 305 may include the information including the indication that the DNAIs are identical, in the N2 path switch request message.

According to an embodiment of the disclosure, the target base station 305 may not determine a target CF stored in a procedure of determining a candidate of the target CF, but include, in the N2 path switch request message, the information indicating that the DNAI associated with the source base station 303 and the DNAI associated with the target base station 305 are identical for each DNN related to the distributed processing of application relocation of the UE.

In operation 327, the access and mobility management function (AMF) entity 309 may transfer an Nsmf_PDUSession_UpdateSMContext Request message to a session management function (SMF) entity 311, based on the N2 path switch request message received from the target base station 305. Relocation or change of the server providing service for the application of the UE may be configured through an AMF entity, an SMF entity, and a UPF entity.

In operation 329, the source base station 303 may transfer, to a CF (hereinafter, a source CF) associated with the source base station, information related to the target CF corresponding to the DNN related to application relocation included in the handover request ACK message received from the target base station 305.

The information related to the target CF corresponding to the DNN related to application relocation may include the following pieces of information.
- Internal network address information of the target CF
- External network Internet address information of the application server (or computing server or edge application server (EAS)) which the target CF interfaces
- DNN indication information of a DN related to distributed processing of application relocation, which corresponds to the target CF

However, the information related to the target CF corresponding to the DNN related to distributed processing of application relocation is not limited thereto and may include various types of information.

In operation 331, the SMF entity 311 may recognize a PDU session for performing relocation of the server due to application relocation, based on the Nsmf_PDUSession_UpdateSMContext Request message transferred from the AMF entity 309. For a PDU session for which a DNAI corresponding to a DNN for which the target CF is selected among DNNs related to distributed processing of application relocation is transferred together with a PDU session ID, the SMF entity may recognize that application relocation is to be performed. The SMF entity 311 may determine to change a UPF entity for the PDU session recognized to be used to perform application relocation, to a UPF entity corresponding to the DNAI having been transferred for the DNN for which the target CF is selected among the DNNs related to distributed processing of application relocation.

For a PDU session for which no DNAI has been transferred together with a PDU session ID, the SMF entity may determine whether the UPF entity needs to be changed, and if the UPF entity needs to be changed, may change the UPF entity and, if necessary, perform an application relocation-related procedure.

In operation 333, the source CF 301 may communicate with the target CF by using the internal network address information of the target CF transferred from the source base station 303 in operation 329 and may exchange information for application relocation of the UE performing handover. The information for application relocation of the UE may include, for example, information related to application context of the UE. However, the information for application relocation of the UE is not limited thereto and may include various types of information. In addition, the source CF 301 and the target CF may exchange information necessary for relocating the CF, which connects the network with the application server providing service for the application of the UE, from the source CF 301 to the target CF.

In operation 335, an application server (or computing server, edge application server (EAS)) which the source CF 301 interfaces (or connects, accesses, or communicates) and the application server which the target CF interfaces may exchange application server context information and information related to relocation of the application server via the Internet at the application level by using the external network Internet address information provided in operation 329. In addition, a relevant procedure may be performed to relocate the CF, which connects to the application server providing service for the application of the UE, from the source CF 301 to the target CF.

In operation 337, the target CF may recognize that the relocation of the CF and server providing service for the application of the UE has been completed through the operation of the operation 335. In this case, the target CF may transfer information indicating that the relocation has been completed to the target base station 305.

In operation 339, after receiving, from the target CF, the information indicating that the relocation of the CF and server providing service for the application of the UE has been completed, the target base station 305 may include, in an N2 SM message, an indication that the relocation for all DNNs for which the target CF has been determined among the DNNs related to distributed processing of application relocation of the UE performing handover has been completed, and transfer the message to the AMF entity 309.

In operation 341, the AMF entity 309 may transfer the N2 SM message received from the target base station 305 to the SMF entity 311.

In operation 343, after receiving the N2 SM message, the SMF entity 311 may perform UPF configuration for the PDU session corresponding to the DNN of the DN related to distributed processing of application relocation of the UE performing handover.

After the UPF configuration is performed, the application of the UE having performed a handover procedure may operate by means of the relocated server providing service for the application.

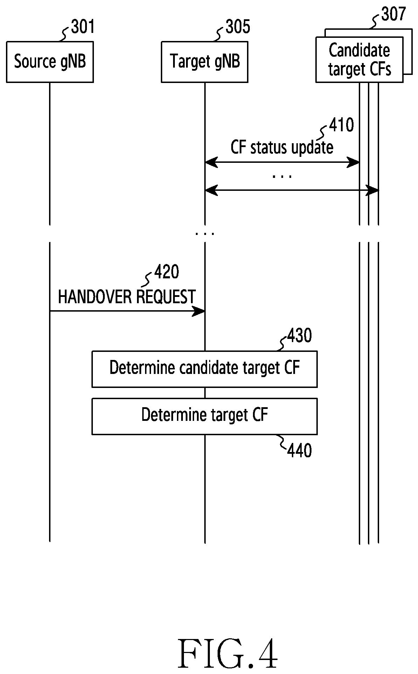

FIG. 4 is a flowchart illustrating an operation of determining a target computing function (CF) according to an embodiment of the disclosure. FIG. 4 illustrates another embodiment of operations (from operation 315 to operation 321) in which the target base station 305 determines a target CF in FIG. 3.

In operation 410, the target base station 305 may update the state of a CF corresponding to a DNN related to distributed processing of application relocation of the UE performing handover, periodically or when an event state (e.g., a change in admission availability) occurs.

The target base station 305 may transmit, to CFs, a message that requests information related to distributed processing of application relocation of the UE performing handover. The CFs having received the message from the target base station 305 may transmit, to the target base station, information related to application relocation of the UE for an application server which each CF interfaces (or connects, accesses, or communicates).

According to an embodiment of the disclosure, the information related to distributed processing of application relocation transmitted by the candidates 307 of the target CF may include the following pieces of information.
- Information on currently available computing resources and information on admission availability
- A DNN corresponding to each CF
- A DNAI corresponding to each CF

The information on admission availability may include information relating to whether a computing/application server connected to each of the candidates of the target CF lacks available resources for providing service for the application of the UE performing handover, or whether the server is able to additionally support a new UE.

The target base station 305 may update the states of the CFs, based on the received information.

However, the information related to distributed processing of application relocation is not limited thereto and may include various types of information.

In operation 420, the target base station 305 may receive a handover request message from the source base station 301. The handover request message may include information on a data network (DN) related to distributed processing of relocation of the application of the UE performing handover. The information on the DN described in the disclosure may include, for example, a data network name (DNN) related to distributed processing of relocation of the application of the UE performing handover, and a data network access identifier (DNAI). In addition, the handover request message may include protocol data unit (PDU) session ID information of the UE performing handover. However, the handover request message is not limited thereto and may include various types of information.

In operation 430, the target base station 305 may determine a candidate of the target CF, based on the handover request message received from the source base station 301.

A cell corresponding to a specific base station may belong to a service area of an application server identified by a specific DNAI. The target base station 305 may determine, based on the received handover request message, whether a DNAI associated with the source base station 303 is the same as a DNAI associated with the target base station 305 with respect to each DNN related to distributed processing of relocation of the application of the UE, to determine whether to perform a procedure of determining the target CF.

When the DNAI associated with the source base station 303 is not the same as the DNAI associated with the target base station 305 with respect to each DNN related to distributed processing of relocation of the application of the UE, the target base station 305 may determine to perform a procedure of determining the target CF. When the target base station 305 determines to perform a procedure of determining the target CF, the target base station 305 may determine, as a candidate of the target CF, a CF identified by the DNAI associated with the target base station 305, which is not identical to the DNAI associated with the source base station 303 with respect to each DNN related to distributed processing of relocation of the application of the UE.

On the other hand, when the DNAI associated with the source base station 303 is the same as the DNAI associated with the target base station 305 with respect to each DNN related to distributed processing of relocation of the application of the UE, the target base station 305 may determine not to perform a procedure of determining the target CF. This may indicate that the source base station 303 and the target base station 305 are within a service area of the same application server. In a case where the DNAI associated with the source base station 303 is the same as the DNAI associated with the target base station 305 with respect to each DNN related to distributed processing of relocation of the application of the UE, since the same UPF entity and application server as those used before the UE performs handover are usable without changing the UPF entity or DNAI, the target CF may not be determined. At this time, the target base station 305 may store information indicating that the DNAIs associated with the source base station 303 and the target base station 305 are identical for each DNN related to the distributed processing of application relocation of the UE, and may include information including an indication that the DNAIs are identical, in an N2 path switch request message transmitted to an AMF entity 309 in operation 325. However, the N2 path switch request message is not limited thereto and may include various types of information.

In operation 440, the target base station 305 may determine a target CF that interfaces (or connects, accesses, or communicates) the application and the server providing service for the application of the UE performing handover among the target CF candidates 307, based on state information of the determined target CF candidates 307. Specifically, the target base station may determine a candidate of the target CF, based on the states of the CFs having already been updated in operation 410. Therefore, the target base station 305 may determine a candidate of the target CF, based on the already received state information of the CFs without a procedure of identifying additional state information of each CF.

According to an embodiment of the disclosure, if it is identified that a particular server is unable to provide service for the application of the UE performing handover, the target base station 305 may not determine a target CF candidate corresponding to the particular server as the target CF. For example, if admission availability information indicating that a particular server lacks available resources for providing service for the application of the UE performing handover or is unable to additionally support a new UE is secured, the target base station may not determine a target CF candidate corresponding to the particular server as the target CF.

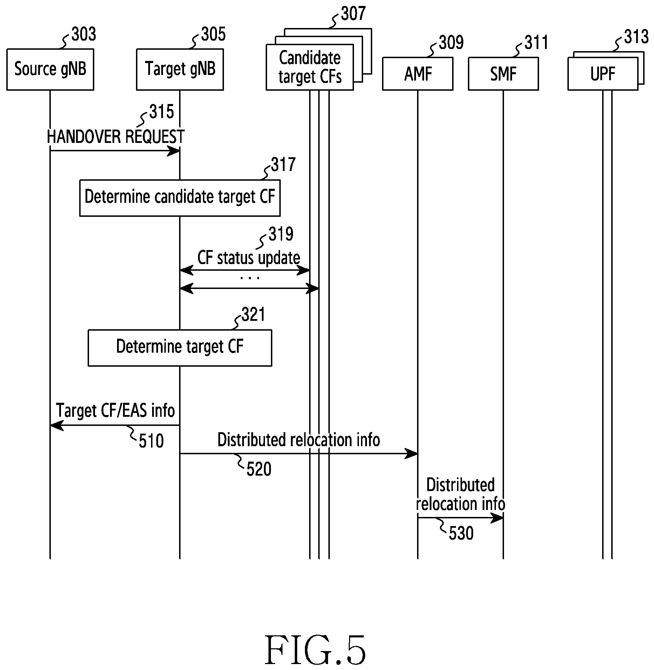

FIG. 5 is a flowchart illustrating an operation of transferring information on determination of a target CF according to an embodiment of the disclosure. FIG. 5 illustrates another embodiment of operations (from operation 323 to operation 327) in which a base station and a network entity transmit and receive information on determination of a target CF in FIG. 3. Hereinafter, the overlapping description of operation 315 to operation 321 described in FIG. 3 is omitted.

The target base station 305, after determining a target CF, may transmit messages for handover of the UE and for relocation of the application server providing service for the application of the UE to the source base station 303 and the AMF entity 309. When an operation of determining a target CF is completed, the target base station 305 may transmit respective messages including necessary information to the source base station 303 and the AMF entity 309. The messages do not necessarily have to be transmitted sequentially and may be transmitted simultaneously.

Referring to FIG. 5, in operation 510, the target base station 305 may transmit, to the source base station 303, a target CF/EAS/info message for handover of the UE and relocation of the server providing service for the application. The target CF/EAS/info message may include the following information.
- Information capable of indicating a DNN related to distributed processing of application relocation, which corresponds to the target CF
- Information on an application server (or computing server or edge application server (EAS)) which the target CF interfaces, and information indicating the server
- Internal network address information of the target CF
- External network Internet address information of the application server (or computing server or edge application server (EAS)) which the target CF interfaces

The information capable of indicating a DNN related to distributed processing of application relocation, which corresponds to the target CF may be included in the target CF/EAS info message as a parameter called DNN. Also, the information on an application server which the target CF interfaces, and the information indicating the server may be included in the target CF/EAS info message as a parameter called Target DNAI.

However, the target CF/EAS/info message is not limited thereto and may include various types of information.

In operation 520, the target base station 305 may transmit, to the AMF entity 309, a distributed relocation info message in association with application relocation of the moving UE. The distributed relocation info message of FIG. 5 may correspond to the N2 path switch request message of FIG. 3. The distributed relocation info message may include a DNAI together with a PDU session ID for only a DNN for which the target CF is selected among DNNs related to distributed processing of application relocation, in which a PDU session of the UE performing handover is established. For a PDU session of a DNN related to distributed processing of application relocation, for which the target CF is not selected, and a PDU session of a DNN not related to application relocation, the target base station 305 may include only the PDU session IDs in the N2 path switch request.

In operation 530, the AMF entity 309 may transfer the distributed relocation info message received from the target base station to the SMF entity 311.

The messages transmitted in operations 510 to 530 may refer to new messages that are different from the messages transmitted and received in the handover procedure described in operations 323 to 327 of FIG. 3. Accordingly, the messages transmitted and received in operations 510 to 530 may not necessarily be transmitted simultaneously with the messages transmitted and received in relation to the handover procedure.

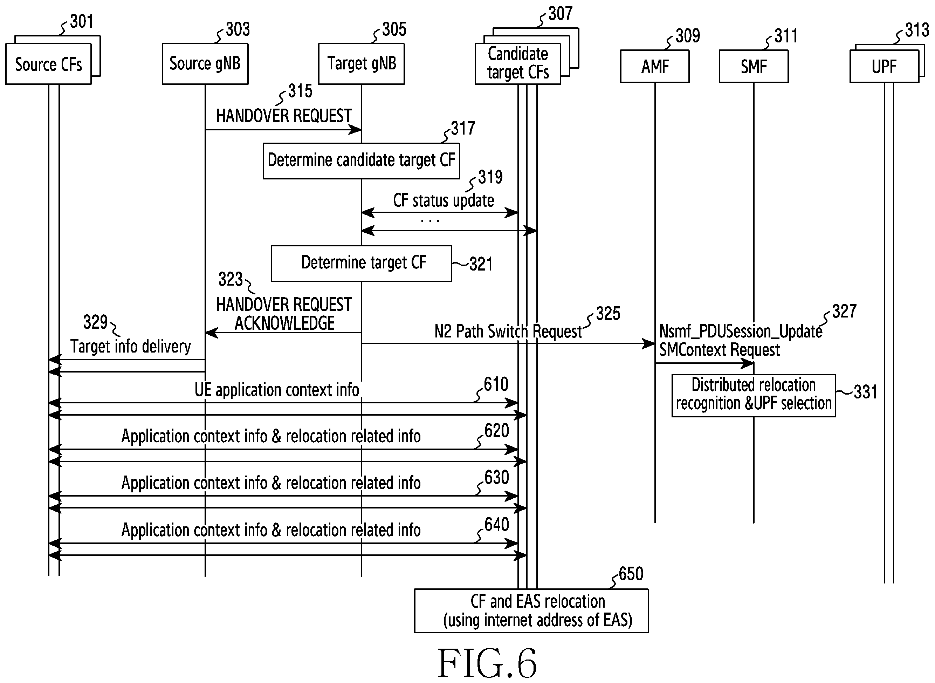

FIG. 6 is a flowchart illustrating an operation of a CF supporting relocation of an application according to an embodiment of the disclosure. FIG. 6 illustrates an additional embodiment of operations (operation 333 to operation 335) in FIG. 3, in which the source CF may communicate with the target CF by using the internal network address information of the target CF transferred from the source base station 303 and may exchange information for application relocation of the UE performing handover. Hereinafter, the overlapping description of operation 315 to operation 331 described in FIG. 3 is omitted.

Referring to FIG. 6, in operation 610, the source CF 301 may communicate with the target CF by using the internal network address information of the target CF transferred from the source base station 303 and may exchange information for application relocation of the UE performing handover. The information for application relocation of the UE may include, for example, information related to application context of the UE. However, the information for application relocation of the UE is not limited thereto and may include various types of information. In addition, the source CF 301 and the target CF may exchange information necessary for relocating the CF, which connects the network with the application server providing service for the application of the UE, from the source CF 301 to the target CF.

In operations 620 to 640, the source CF 301 and the target CF may exchange, within the network, not only the information related to application context of the UE, but also application server context information and information related to relocation of the application server, which have been exchanged between application servers via the Internet at the application level.

In operation 650, an application server (or computing server, edge application server (EAS)) which the source CF 301 interfaces (or connects, accesses, or communicates) and the application server which the target CF interfaces may exchange application server context information and information related to relocation of the application server via the Internet at the application level by using the external network Internet address information provided in operation 329. In addition, also based on the application server context information and the information related to relocation of the application server, a relevant procedure may be performed to relocate the CF, which connects to the application server providing service for the application of the UE, from the source CF 301 to the target CF.

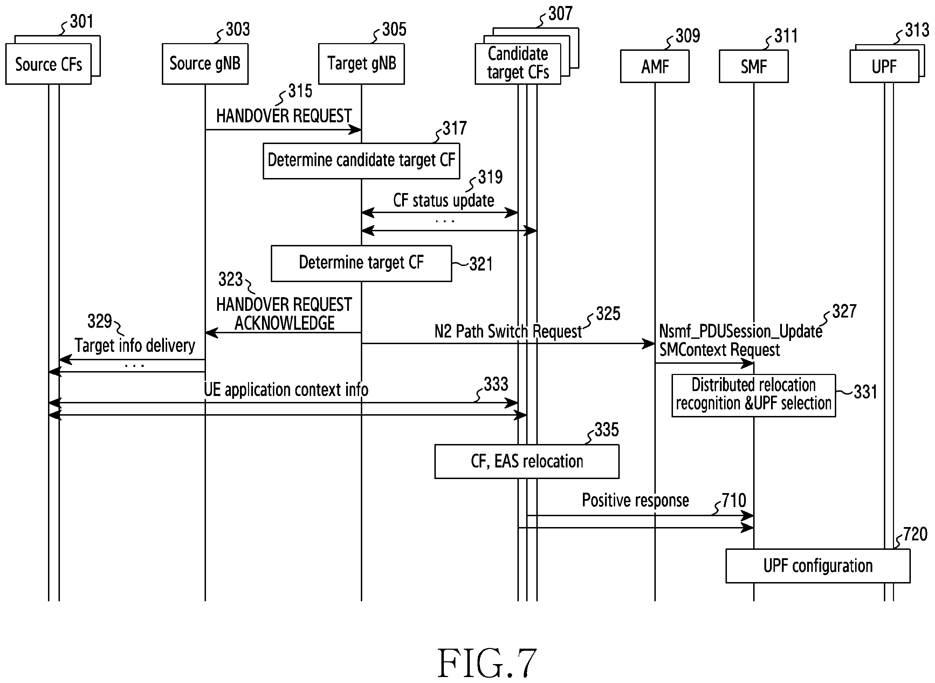

FIG. 7 is a flowchart illustrating an operation of reporting that supporting of relocation of an application has been completed according to an embodiment of the disclosure. FIG. 7 illustrates another embodiment of operations (from operation 337 to operation 341) in which a target CF reports that supporting of relocation of an application has been completed in FIG. 3. Hereinafter, the overlapping description of operation 315 to operation 335 described in FIG. 3 is omitted.

Referring to FIG. 7, in operation 710, when relocation of the server providing service for the application of the UE performing handover is completed from the application server associated with the source base station 303 to the application server associated with the target base station 305, each target CF may directly report, to the SMF entity 311, that the relocation has been completed. Additionally, when CF relocation is completed from the source CF interfacing the application server associated with the source base station to the target CF interfacing the application server associated with the target base station, the target CF may report that the relocation has been completed to the SMF entity 311. Since each target CF has a different DNN related to distributed processing of relocation, each target CF may perform relocation with respect to a PDU session ID for which a DNAI corresponding to a selected DNN related to distributed processing of relocation has been transferred. Each target CF may, whenever relocation of the server and the CF is completed, transmit, to the SMF entity 311, a positive response indicating that the relocation has been completed. In contrast, the transmitting, by the target CF, a positive response to the target base station 305 in operation 337 of FIG. 3 may be performed when all the target CFs have completed relocation of the server providing service for the application of the UE performing handover and relocation of the CF interfacing (or connecting, accessing, or communicating) with the server from the source CF to the target CF.

In operation 720, the SMF entity 311 may perform UPF configuration, based on a messages indicating that relocation has been completed, received from each target CF. Specifically, whenever the SMF entity 311 receives, from each target CF, a message indicating that the target CF has relocated the server providing service for the application of the UE performing handover and has relocated the CF interfacing with the server from the source CF to the target CF, the SMF entity 311 may perform UPF configuration for a PDU session that supports service to the application of the UE performing handover and is related to the corresponding target CF. By performing a UPF configuration operation each time a relocation procedure of a corresponding target CF is completed, the SMF entity 311 may reduce the delay time until the relocation procedures of all the target CFs are completed.

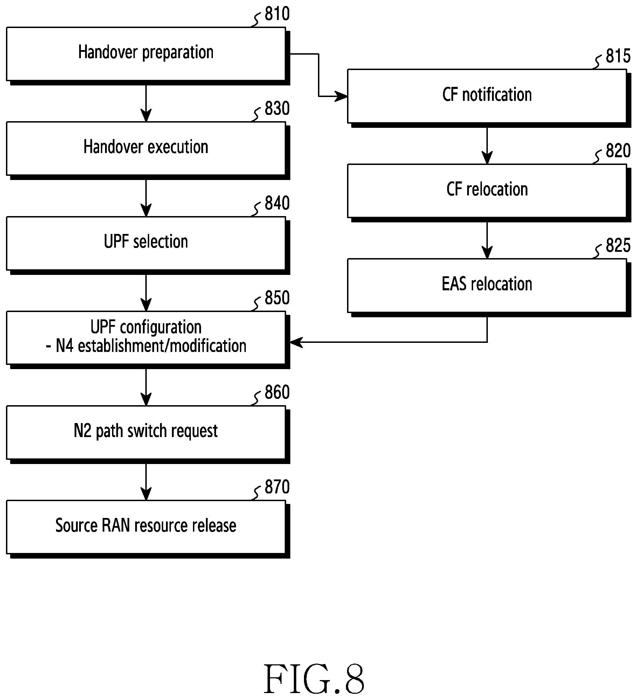

FIG. 8 is a flowchart illustrating an operation of supporting relocation of a server that provides service for an application of a UE performing handover according to an embodiment of the disclosure. FIG. 8 illustrates a case where a handover procedure and a procedure of relocating the application of the UE are performed because the UE needs to receive service from a different cell and a different server during the movement of the UE. In addition, FIG. 8 is a flowchart briefly illustrating the contents described with reference to FIG. 3.

Referring to FIG. 8, in operation 810, a handover preparation procedure may be performed. A source base station may transmit a handover request message to a target base station. When the handover request message is received, the target base station may perform a procedure of determining whether it is necessary to determine a target CF.

In operation 815, based on the handover request message from the source base station, the target base station may recognize information indicating that the CF supporting service for an application of a UE performing handover may be changed (or relocated) in relation to relocation of the application.

In operation 820, the target base station may determine a target CF that is to support service for the application in relation to application relocation of the UE, based on the handover request message from the source base station. Through information exchange between target CFs and the source base station and between the source base station and an associated CF (hereinafter, a source CF), a procedure related to relocation from the source CF to the target CF may be performed.

In operation 825, a procedure related to relocation of an application server which the CF interfaces with computing resources may also be performed.

In operation 830, a handover procedure may be performed. The source base station may receive a handover request ACK message including information related to handover from the target base station, and based on the received message, may perform a procedure for changing the base station performing data communication with the UE from the source base station to the target base station.

In operation 840, a UPF selection procedure may be performed. When the UE moves and not only handover is required but also the application server providing service for the application of the UE needs to be changed, a UPF entity interfacing the application server and the network may also need to be changed. In this case, a procedure for selecting the changed UPF entity may be performed.

The procedures of operations 830 to 840 may be performed simultaneously or in parallel with operations 815 to 825.

In operation 850, after receiving an N2 SM message, an SMF entity may perform UPF configuration for a PDU session related to application relocation of the UE performing handover.

In operation 860, an N2 path switch request message for performing communication with the relocated server providing service for the application of the moved UE may be transmitted and received according to the UPF configuration.

In operation 870, source radio access network (RAN) resources may be released according to the CF and server changed based on the relocation of the application.

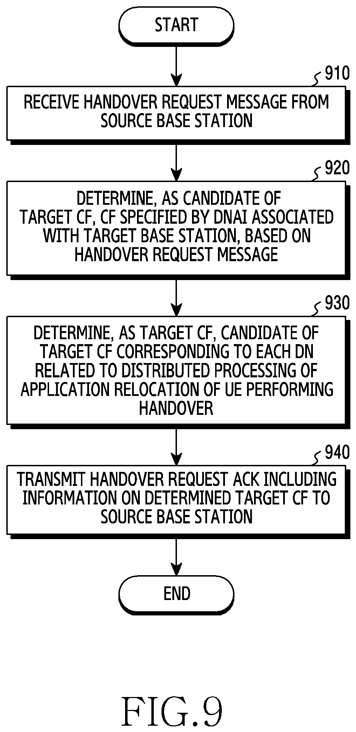

FIG. 9 illustrates an operation of a target base station according to an embodiment of the disclosure.

Referring to FIG. 9, in operation 910, a target base station may receive a handover request message from a source base station. The handover request message may include information on a data network (DN) related to distributed processing of relocation of an application of a UE performing handover. The information on the DN described in the disclosure may include, for example, a data network name (DNN) related to distributed processing of relocation of the application of the UE performing handover, and a data network access identifier (DNAI). In addition, the handover request message may include protocol data unit (PDU) session ID information of the UE performing handover. However, the handover request message is not limited thereto and may include various types of information.

In operation 920, based on the handover request message received from the source base station, the target base station may determine, as a candidate of a target computing function (CF) that interfaces (or connects, accesses, or communicates) the application of the UE performing handover with an application server, a CF identified by a data network access identifier (DNAI) associated with the target base station with respect to each DNN related to distributed processing of relocation of the application of the UE. The CF identified by the DNAI may transfer information between the application server and the network.

A cell corresponding to a specific base station may belong to a service area of an application server identified by a specific DNAI. The target base station may determine, based on the received handover request message, whether the DNAI associated with the source base station is the same as the DNAI associated with the target base station with respect to each DNN related to distributed processing of relocation of the application of the UE, to determine whether to perform a procedure of determining the target CF.

When the DNAI associated with the source base station is not the same as the DNAI associated with the target base station with respect to each DNN related to distributed processing of relocation of the application of the UE, the target base station may determine to perform a procedure of determining the target CF. When the target base station determines to perform a procedure of determining the target CF, the target base station may determine, as a candidate of the target CF, a CF identified by the DNAI associated with the target base station, which is not identical to the DNAI associated with the source base station with respect to each DNN related to distributed processing of relocation of the application of the UE.

On the other hand, when the DNAI associated with the source base station is the same as the DNAI associated with the target base station with respect to each DNN related to distributed processing of relocation of the application of the UE, the target base station may determine not to perform a procedure of determining the target CF. This may indicate that the source base station 303 and the target base station 305 are within a service area of the same application server. In a case where the DNAI associated with the source base station is the same as the DNAI associated with the target base station with respect to each DNN related to distributed processing of relocation of the application of the UE, since the same UPF entity and application server as those used before the UE performs handover are usable without changing the UPF entity or DNAI, the target CF may not be determined. At this time, the target base station may store information indicating that the DNAIs associated with the source base station and the target base station are identical for each DNN related to the distributed processing of application relocation of the UE, and may include information including an indication that the DNAIs are identical, in an N2 path switch request message transmitted to an AMF entity in the future. However, the N2 path switch request message is not limited thereto and may include various types of information.

In operation 930, the target base station may determine, as the target CF, a target CF candidate corresponding to each DN related to distributed processing of application relocation of the UE performing handover among the determined candidates of the target CF.

The target base station may receive information related to application relocation of the UE performing handover to the candidates of the target CF. The target base station may transmit, to the candidates of the target CF, a message that requests information related to distributed processing of application relocation of the UE performing handover, and the candidates of the target CF having received the message from the target base station may transmit, to the target base station, information related to application relocation of the UE for an application server which each CF interfaces (or connects, accesses, or communicates).

According to an embodiment of the disclosure, information related to distributed processing of application relocation transmitted by the candidates of the target CF may include the following pieces of information.
- Information on currently available computing resources and information on admission availability
- A DNN corresponding to an application server which each of the candidates of the target CF interfaces
- A DNAI specifying the application server which each of the candidates of the target CF interfaces

The information on admission availability may include information relating to whether a computing/application server connected to each of the candidates of the target CF is able to support service for the application of the UE performing handover, or whether the computing/application server is able to support an additional UE.

However, the information related to application relocation is not limited thereto and may include various types of information.

The target base station may update the states of the target CFs, based on the received information. The target base station 305 may determine a target CF that interfaces (or connects, accesses, or communicates) the application and a server providing service for the application of the UE performing handover among the target CF candidates 307, based on the received information related to application relocation of the target CF candidates 307.

According to an embodiment of the disclosure, if it is identified that a particular server is unable to provide service for the application of the UE performing handover, the target base station may not determine a target CF candidate corresponding to the particular server as the target CF. For example, if admission availability information indicating that a particular server lacks available resources for providing service for the application of the UE performing handover or is unable to additionally support a new UE is secured, the target base station may not determine a target CF candidate corresponding to the particular server as the target CF.

In operation 940, the target base station 305 may transmit a handover request ACK message (HANDOVER REQUEST ACKNOWLEDGE message) including information on the determined target CF to the source base station. The handover request ACK message may include the following information.
- Information capable of indicating a DNN related to distributed processing of application relocation, which corresponds to the target CF
- Information on an application server (or computing server or edge application server (EAS)) which the target CF interfaces, and information indicating the server
- Internal network address information of the target CF
- External network Internet address information of the application server which the target CF interfaces

The information capable of indicating a DNN related to distributed processing of application relocation, which corresponds to the target CF may be included in the handover request ACK message as a parameter called DNN. Also, the information on an application server which the target CF interfaces, and the information indicating the server may be included in the handover request ACK message as a parameter called Target DNAI.

However, the handover request ACK message is not limited thereto and may include various types of information.

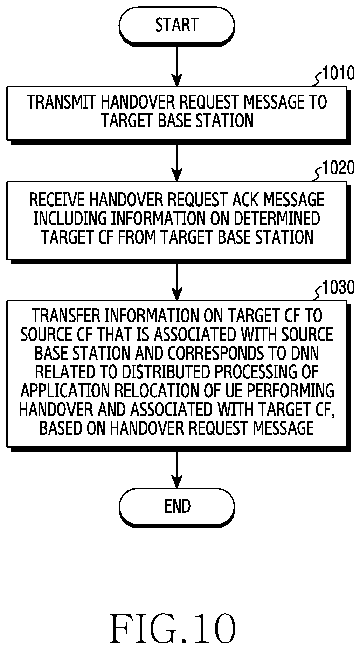

An operation of the source base station having received the handover request ACK message will be described with reference to FIG. 10.

As described above, when relocation of the server providing service for the application is needed according to the movement of the UE performing handover, the target base station may determine a target CF interfacing (or connecting, accessing, or communicating) computing resources and an application server in order to change the application server that provides service for the application. Information related to relocation of the application may be transmitted and received to and from the determined target CF, and accordingly, the CF and application server supporting service for the application of the UE may be finally changed (or relocated).

According to the disclosure, when a UE including an application requiring computing exceeding the capacity of the UE or using high-performance AI moves, the UE may perform a handover procedure caused by inter-cell movement and, simultaneously, relocate the server providing service for the application and the CF interfacing (or connecting, accessing, or communicating) the application and the server, thereby effectively reducing computing delay.

FIG. 10 illustrates an operation of a source base station according to an embodiment of the disclosure.

Referring to FIG. 10, in operation 1010, a source base station may transmit a handover request message (HANDOVER REQUEST message) to a target base station when a UE moves from a source cell to a target cell. The handover request message may include information on a data network (DN) related to distributed processing of relocation of an application of the UE performing handover. The information on the DN described in the disclosure may include, for example, a data network name (DNN) of a DN related to distributed processing of relocation of the application of the UE performing handover, and a data network access identifier (DNAI). In addition, the handover request message may include protocol data unit (PDU) session ID information of the UE performing handover. However, the handover request message is not limited thereto and may include various types of information.

In operation 1020, the source base station may receive a handover request ACK message (HANDOVER REQUEST ACKNOWLEDGE message) including information on a target CF determined by the target base station from the target base station. The handover request ACK message may include the following information. However, the handover request ACK message is not limited thereto and may include various types of information.
- Information capable of indicating a DNN related to distributed processing of application relocation, which corresponds to the target CF
- Information on an application server (or computing server or edge application server (EAS)) which the target CF interfaces, and information indicating the server
- Internal network address information of the target CF
- External network Internet address information of the application server which the target CF interfaces

The information capable of indicating a DNN related to distributed processing of application relocation, which corresponds to the target CF may be included in the handover request ACK message as a parameter called DNN. Also, the information on an application server which the target CF interfaces, and the information indicating the server may be included in the handover request ACK message as a parameter called Target DNAI.

However, the handover request ACK is not limited thereto and may include various types of information.

In operation 1030, the source base station may transfer the information on the target CF to a source CF associated with the source base station and corresponding to the target CF, based on the handover request ACK message received from the target base station. Specifically, the source base station may transfer, to a CF (hereinafter, a source CF) associated with the source base station, information related to the target CF corresponding to the DNN related to distributed processing of application relocation included in the handover request ACK message received from the target base station.

The information related to the target CF corresponding to the DNN related to distributed processing of application relocation may include the following pieces of information.
- Internal network address information of the target CF
- External network Internet address information of the application server which the target CF interfaces
- Information capable of indicating a DNN related to distributed processing of application relocation, which corresponds to the target CF

However, the information related to the target CF corresponding to the DNN related to distributed processing of application relocation is not limited thereto and may include various types of information.

Thereafter, the source base station may connect the target CF to the source CF associated with the source base station and corresponding to the target CF so that the source CF transmits and receives, to and from the target CF, a message including information for distributed processing of application relocation of the UE performing handover.

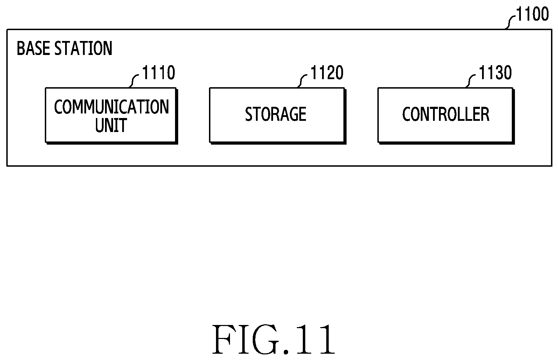

FIG. 11 illustrates a structure of a base station according to various embodiments of the disclosure.

Referring to FIG. 11, the base station 1100 includes a communication unit 1110, a storage 1120, and a controller 1130.

The communication unit 1110 performs functions for transmitting/receiving signals through a radio channel. For example, the communication unit 1110 performs functions of conversion between baseband signals and bitstrings according to the physical layer specifications of the system. For example, during data transmission, the communication unit 1110 generates complex symbols by encoding and modulating a transmission bitstream. In addition, during data reception, the communication unit 1110 demodulates and decodes a baseband signal to restore a received bitstring. In addition, the wireless communication unit 1110 up-converts a baseband signal to a radio frequency (RF) band signal, transmits the up-converted RF band signal via an antenna, and then down-converts the RF band signal received via the antenna to a baseband signal.

To this end, the wireless communication unit 1110 may include a transmission filter, a reception filter, an amplifier, a mixer, an oscillator, a digital to analog converter (DAC), an analog to digital converter (ADC), and the like. In addition, the communication unit 1110 may include multiple transmission/reception paths. Furthermore, the wireless communication unit 1110 may include at least one antenna array including multiple antenna elements. In terms of hardware, the wireless communication unit 1110 may include a digital unit and an analog unit, and the analog unit may include multiple sub-units according to operation power, frequencies, etc.

The communication unit 1110 may transmit/receive signals. To this end, the communication unit 1110 may include at least one transceiver. For example, the communication unit 1110 may transmit a synchronization signal, a reference signal, system information, a message, control information, data, or the like. Furthermore, the communication unit 1110 may perform beamforming.

The communication unit 1110 transmits and receives signals as described above. Accordingly, all or part of the communication unit 1110 may be referred to as a "transmitter", a "receiver", or a "transceiver". In addition, as used in the following description, the meaning of "transmission and reception performed through a radio channel" includes the meaning that the above-described processing is performed by the communication unit 1110.

The storage 1120 may store basic programs, application programs, and data, such as configuration information, for operation of the main base station. The storage 1120 may include a memory. The storage 1120 may include a volatile memory, a nonvolatile memory, or a combination of a volatile memory and a nonvolatile memory. In addition, the storage 1120 provides the stored data at the request of the controller 1130.

The controller 1130 controls the overall operation of the base station 1100. For example, the controller 1130 transmits/receives signals through the communication unit 1110. In addition, the controller1130 records data in the storage 1120 and reads the data from the storage 1120. Furthermore, the controller 1130 may perform functions of protocol stacks required by communication specifications. To this end, the controller 1130 may include at least one processor.

The structure of the base station 1100 illustrated in FIG. 11 is a merely an example of the base station, and examples of the base station for performing various embodiment of the disclosure are not limited to the structure illustrated in FIG. 11. That is, some elements may be added, omitted, or changed according to various embodiments.

In FIG. 11, the base station 1100 has been described as a single entity, but the disclosure is not limited thereto. In addition to the integrated deployment, the base station 1100 according to various embodiments of the disclosure may be implemented to construct an access network having a distributed deployment. According to an embodiment, the base station may be divided into a central unit (CU) and a digital unit (DU), the CU may be implemented to perform upper layer functions (e.g., packet data convergence protocol (PDCP) and RRC), and the DU may be implemented to perform lower layer functions (e.g., medium access control (MAC) and physical (PHY)). The DU of the base station may form beam coverage on a radio channel.

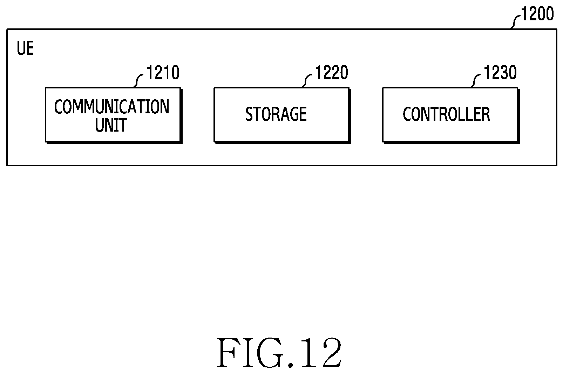

FIG. 12 illustrates a structure of a UE 1200 according to various embodiments of the disclosure.

The structure illustrated in FIG. 12 may be understood as a structure of the UE 1200. As used below, such terms as "... unit" and "... device" refer to a unit configured to process at least one function or operation, and may be implemented as hardware, software, or a combination of hardware and software.

Referring to FIG. 12, the UE 1200 includes a communication unit 1210, a storage 1220, and a controller 1230.

The communication unit 1210 performs functions for transmitting/receiving signals through a radio channel. For example, the communication unit 1210 performs functions of conversion between baseband signals and bitstrings according to the physical layer specifications of the system. For example, during data transmission, the communication unit 1210 generates complex symbols by encoding and modulating a transmission bitstream. In addition, during data reception, the communication unit 1210 demodulates and decodes a baseband signal to restore a received bitstring. In addition, the communication unit 1210 up-converts a baseband signal to an RF band signal, transmits the same through an antenna, and down-converts an RF band signal received through the antenna to a baseband signal. For example, the communication unit 1210 may include a transmission filter, a reception filter, an amplifier, a mixer, an oscillator, a DAC, and an ADC.

In addition, the communication unit 1210 may include multiple transmission/reception paths. Furthermore, the communication unit 1210 may include an antenna unit. The communication unit 1210 may include at least one antenna array configured by multiple antenna elements. In terms of hardware, the communication unit 1210 may include a digital circuit and an analog circuit (e.g., a radio frequency integrated circuit (RFIC)). The digital circuit and analog circuit may be implemented as a single package. In addition, the communication unit 1210 may include multiple RF chains. The communication unit 1210 may perform beamforming. In order to assign directivity based on configurations of the controller 1230 to a signal to be transmitted/received, the communication unit 1210 may apply a beamforming weight to the signal. According to an embodiment, the communication unit 1210 may include a radio frequency (RF) block (or RF unit). The RF block may include a first RF circuitry related to antennas and a second RF circuitry related to baseband processing. The first RF circuitry may be referred to as an RF-antenna (RF-A). The second RF circuitry may be referred to as an RF-baseband (RF-B).

In addition, the communication unit 1210 may transmit/receive signals. To this end, the communication unit 1210 may include at least one transceiver. In addition, the communication unit 1210 may receive a downlink signal. The downlink signal may include a synchronization signal (SS), a reference signal (RS) (e.g., demodulation (DM)-RS or phase tracking reference signal (PTRS)), system information (e.g., MIB, SIB, remaining system information (RMSI), or other system information (OSI)), a configuration message, control information, downlink data, or the like. The communication unit 1210 may transmit an uplink signal. The uplink signal may include a random access-related signal (e.g., random access preamble (RAP) (or message 1 (Msg1), message 3 (Msg3)), a reference signal (e.g., sounding reference signal (SRS), DMRS, or PTRS), a power headroom report (PHR), or the like.

In addition, the communication unit 1210 may include different communication modules for processing signals in different frequency bands. Furthermore, the communication unit 1210 may include multiple communication modules in order to support multiple different radio access techniques. For example, the multiple different radio access techniques may include Bluetooth low energy (BLE), Wireless Fidelity (Wi-Fi), WiFi Gigabyte (WiGig), a cellular network (e.g., long term evolution (LTE) or new radio (NR)), and the like. Also, the different frequency bands may include super high frequency (SHF) bands (e.g., 2.5GHz or 5GHz bands), millimeter wave (mmWave) bands (e.g., 38GHz or 60GHz bands), and the like. In addition, the communication unit 1210 may also use the same type radio access technique in different frequency bands (e.g., unlicensed bands for licensed assisted access (LAA) or citizens broadband radio service (e.g., 3.5GHz)).

The communication unit 1210 transmits and receives signals as described above. Accordingly, all or part of the communication unit 1210 may be referred to as a "transmitter", a "receiver", or a "transceiver". In addition, as used in the following description, the meaning of "transmission and reception performed through a radio channel" includes the meaning that the above-described processing is performed by the communication unit 1210.

The storage 1220 may store basic programs, application programs, and data, such as configuration information, for operation of the main base station. The storage 1220 may include a volatile memory, a nonvolatile memory, or a combination of a volatile memory and a nonvolatile memory. In addition, the storage 1220 provides the stored data at the request of the controller 1230.

The controller 1230 controls overall operations of the UE 1200. For example, the controller 1230 transmits/receives signals through the communication unit 1210. In addition, the controller1230 records data in the storage 1220 and reads the data from the storage 1220. In addition, the controller 1230 may perform functions of protocol stacks required by communication specifications. To this end, the controller 1230 may include at least one processor. The controller 1230 may include at least one processor or micro-processor, or may be a part of a processor. In addition, a part of the communication unit 1210 and the controller 1230 may be referred to as a communication processor (CP). The controller 1230 may include various modules for performing communication. According to various embodiments, the controller 1230 may control the UE to perform operations according to various embodiments.

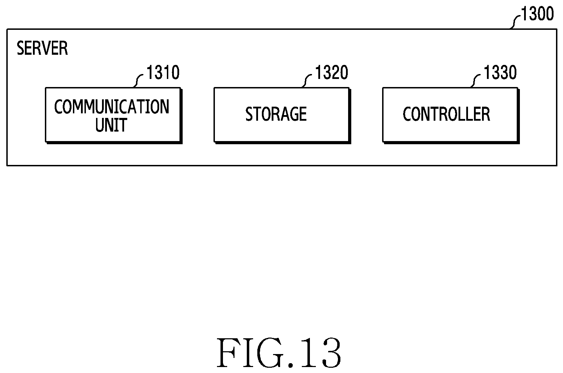

FIG. 13 illustrates a structure of a server according to an embodiment of the disclosure.

Referring to FIG. 13, the server may include a communication unit 1310, a storage 1320, and a controller 1330. As used herein, the controller 1330 may be defined as a circuit, an application specific integrated circuit, or at least one processor.

The server may correspond to at least one of a computing server, an application server, or a data network server.

The communication unit 1310 may transmit/receive signals with other network entities. For example, the communication unit 1310 may transmit/receive information with other servers via a specific interface.

In addition, the storage 1320 may store at least one of information transmitted/received through the communication unit 1310 and information generated through the controller 1330.

The controller 1323 may control the overall operation of the server according to the embodiments of the disclosure. For example, the controller 1330 may control signal flows between the respective blocks to perform operations according to the above-described flowcharts.

The embodiments of the disclosure described and shown in the specification and the drawings are merely particular examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary.

As described above, a method performed by a target base station in a wireless communication system according to various embodiments of the disclosure may include receiving a handover request message from a source base station, determining, as target CF candidates, computing functions (CFs) identified by data network access identifiers (DNAIs) associated with the target base station, based on the handover request message, determining, as a target CF, a target CF candidate corresponding to each data network (DN) related to distributed processing of application relocation of a terminal performing handover among the target CF candidates, and transmitting a handover request ACK message including information on the determined target CF to the source base station, wherein the target CF connects a network with an application server providing service for an application of the terminal performing handover.

According to various embodiments of the disclosure, the method may further include transmitting an N2 path switch request message to an access and mobility management function (AMF) entity, and the N2 path switch request message may include PDU session ID information corresponding to a data network name (DNN) associated with the target CF among DNNs related to distributed processing of application relocation of the terminal performing handover.

According to various embodiments of the disclosure, the method may further include receiving, from the determined target CF, a message including information indicating completion of relocation of a CF which connects the network with the application server providing service for the application of the terminal performing handover, and completion of relocation of the application server, based on the target CF, and transferring the message to the AMF entity through an N2 SM message.

According to various embodiments of the disclosure, the determining of the target CF candidates may include determining whether a DNAI associated with the source base station is identical to a DNAI associated with the target base station with respect to a DNN related to distributed processing of relocation of the application server of the terminal, in case that the DNAI associated with the source base station is not identical to the DNAI associated with the target base station, determining a target CF candidate, and in case that the DNAI associated with the source base station is identical to the DNAI associated with the target base station, not determining a target CF candidate and storing information indicating that the DNAIs are identical.

According to various embodiments of the disclosure, the determining of the target CF candidates may further include requesting information related to application relocation from the target CF candidates, and receiving the information related to application relocation from the target CF candidates.

According to various embodiments of the disclosure, the handover request message may include information on a DNN related to distributed processing of application relocation of the terminal performing handover and PDU session ID information of the terminal.

According to various embodiments of the disclosure, the handover request ACK message may include indicator information of a DNN associated with the target CF in information on a DNN related to distributed processing of relocation of the application server providing service for the application of the terminal performing handover, DNAI information associated with the target CF, and network address information of the target CF.

As described above, a device of a target base station in a wireless communication system according to various embodiments of the disclosure may include a communication unit and a controller, wherein the controller is configured to perform control to receive a handover request message from a source base station, determine, as target CF candidates, computing functions (CFs) identified by data network access identifiers (DNAIs) associated with the target base station, based on the handover request message, determine, as a target CF, a target CF candidate corresponding to each data network (DN) related to distributed processing of application relocation information of a terminal (UE) performing handover among the target CF candidates, and transmit a handover request ACK message including information on the determined target CF to the source base station, and wherein the target CF connects a network with an application server providing service for an application of the terminal performing handover.

According to various embodiments of the disclosure, the controller may be configured to transmit an N2 path switch request message to an access and mobility management function (AMF) entity, and the N2 path switch request message may include PDU session ID information corresponding to a data network name (DNN) associated with the target CF among DNNs related to distributed processing of application relocation of the terminal performing handover.

According to various embodiments of the disclosure, the controller may be configured to perform control to receive, from the determined target CF, a message including information indicating completion of relocation of a CF which connects the network with the application server providing service for the application of the terminal performing handover, and completion of relocation of the application server, based on the target CF, and transfer the message to the AMF entity through an N2 SM message.

According to various embodiments of the disclosure, with respect to a DNN related to distributed processing of relocation of the application server of the terminal, the controller may be configured to perform control to determine whether a DNAI associated with the source base station is identical to a DNAI associated with the target base station, in case that the DNAI associated with the source base station is not identical to the DNAI associated with the target base station, determine a target CF candidate, and in case that the DNAI associated with the source base station is identical to the DNAI associated with the target base station, not determine a target CF candidate and store information indicating that the DNAIs are identical.

According to various embodiments of the disclosure, the controller may be configured to perform control to request information related to application relocation from the target CF candidates, and receive the information related to application relocation from the target CF candidates.

According to various embodiments of the disclosure, the handover request message may include information on a DNN related to distributed processing of application relocation of the terminal performing handover and PDU session ID information of the terminal.

According to various embodiments of the disclosure, the handover request ACK message may include indicator information of a DNN associated with the target CF in information on a DNN related to distributed processing of relocation of the application server providing service for the application of the terminal performing handover, DNAI information associated with the target CF, and network address information of the target CF.

As described above, a method performed by a source base station in a wireless communication system according to various embodiments of the disclosure may include transmitting a handover request message to a target base station, receiving a handover request ACK message including information on a determined target computing function (CF) from the target base station, and based on the handover request ACK message, transferring the information on the target CF to a source CF which is associated with the source base station and corresponds to a data network name (DNN) related to distributed processing of application relocation of a terminal (UE) performing handover and associated with the target CF.

According to various embodiments of the disclosure, the method may further include connecting the source CF to the target CF so as to enable the source CF and the target CF to transmit and receive a message including information for distributed processing of application relocation of the terminal performing handover.

According to various embodiments of the disclosure, the handover request message may include information on a DNN related to distributed processing of application relocation of the terminal performing handover and PDU session ID information of the terminal.

According to various embodiments of the disclosure, the handover request ACK message may include indicator information of a DNN associated with the target CF among DNNs related to distributed processing of relocation of an application server of the terminal performing handover, DNAI information associated with the target CF, and network address information of the target CF.

As described above, a device of a source base station in a wireless communication system according to various embodiments of the disclosure may include a communication unit, and a controller, wherein the controller is configured to perform control to transmit a handover request message to a target base station, receive a handover request ACK message including information on a determined target computing function (CF) from the target base station, and based on the handover request ACK message, transfer the information on the target CF to a source CF which is associated with the source base station and corresponds to a data network name (DNN) related to distributed processing of application relocation of a terminal (UE) performing handover and associated with the target CF.

According to various embodiments of the disclosure, the controller may be configured to perform control to connect the source CF to the target CF so as to enable the source CF and the target CF to transmit and receive a message including information for distributed processing of application relocation of the terminal performing handover.

## Claims

1. A method performed by a target base station in a wireless communication system, the method comprising:
receiving a handover request message from a source base station;
identifying, as target CF candidates, computing functions (CFs) identified by data network access identifiers (DNAIs) associated with the target base station, based on the handover request message;
identifying, as a target CF, a target CF candidate corresponding to each data network (DN) related to distributed processing of application relocation of a user equipment (UE) performing handover among the target CF candidates; and
transmitting a handover request ACK message including information on the identified target CF to the source base station,
wherein the target CF connects a network with an application server servicing an application of the UE performing handover.

2. The method of claim 1, further comprising transmitting an N2 path switch request message to an access and mobility management function (AMF) entity,
wherein the N2 path switch request message comprises PDU session ID information corresponding to a data network name (DNN) associated with the target CF among DNNs related to distributed processing of application relocation of the UE performing handover.

3. The method of claim 2, further comprising:
receiving, from the identified target CF, a message including information indicating completion of relocation of a CF which connects the network with the application server servicing the application of the UE performing handover, and completion of relocation of the application server, based on the target CF; and
transferring the message to the AMF entity through an N2 SM message.

4. The method of claim 1, wherein the identifying of the target CF candidates comprises:
identifying whether a DNAI associated with the source base station is identical to a DNAI associated with the target base station with respect to a DNN related to distributed processing of relocation of the application server of the UE;
in case that the DNAI associated with the source base station is not identical to the DNAI associated with the target base station, identifying target CF candidates; and
in case that the DNAI associated with the source base station is identical to the DNAI associated with the target base station, identifying no target CF candidates and storing information indicating that the DNAIs are identical.

5. The method of claim 1, wherein the identifying of the target CF candidates further comprises:
requesting information related to application relocation from the target CF candidates; and
receiving the information related to application relocation from the target CF candidates.

6. A device of a target base station in a wireless communication system, the device comprising:
a communication unit; and
a controller,
wherein the controller is configured to perform control to:
receive a handover request message from a source base station;
identify, as target CF candidates, computing functions (CFs) identified by data network access identifiers (DNAIs) associated with the target base station, based on the handover request message;
identify, as a target CF, a target CF candidate corresponding to each data network (DN) related to distributed processing of application relocation information of a user equipment (UE) performing handover among the target CF candidates; and
transmit a handover request ACK message including information on the identified target CF to the source base station, and
wherein the target CF connects a network with an application server servicing an application of the UE performing handover.

7. The device of claim 6, wherein the controller is configured to perform control to transmit an N2 path switch request message to an access and mobility management function (AMF) entity, and
wherein the N2 path switch request message comprises PDU session ID information corresponding to a data network name (DNN) associated with the target CF among DNNs related to distributed processing of application relocation of the UE performing handover.

8. The device of claim 7, wherein the controller is configured to perform control to:
receive, from the identified target CF, a message including information indicating completion of relocation of a CF which connects the network with the application server servicing the application of the UE performing handover, and completion of relocation of the application server, based on the target CF; and
transfer the message to the AMF entity through an N2 SM message.

9. The device of claim 6, wherein the controller is configured to perform control to:
identify whether a DNAI associated with the source base station is identical to a DNAI associated with the target base station with respect to a DNN related to distributed processing of relocation of the application server of the UE;
in case that the DNAI associated with the source base station is not identical to the DNAI associated with the target base station, identify target CF candidates; and
in case that the DNAI associated with the source base station is identical to the DNAI associated with the target base station, identify no target CF candidates and store information indicating that the DNAIs are identical.

10. The device of claim 6, wherein the controller is configured to perform control to:
request information related to application relocation from the target CF candidates; and
receive the information related to application relocation from the target CF candidates.

11. The device of claim 6, wherein the handover request message comprises information on a DNN related to distributed processing of application relocation of the UE performing handover and PDU session ID information of the UE.

12. The device of claim 6, wherein the handover request ACK message comprises indicator information of a DNN associated with the target CF, DNAI information associated with the target CF, and network address information of the target CF among information on a DNN related to distributed processing of relocation of the application server servicing the application of the UE performing handover.

13. A method performed by a source base station in a wireless communication system, the method comprising:
transmitting a handover request message to a target base station;
receiving a handover request ACK message including information on a identified target computing function (CF) from the target base station; and
based on the handover request ACK message, transferring the information on the target CF to a source CF which is associated with the source base station and corresponds to a data network name (DNN) associated with the target CF and related to distributed processing of application relocation of a user equipment (UE) performing handover.

14. A device of a source base station in a wireless communication system, the device comprising:
a communication unit; and
a controller,
wherein the controller is configured to perform control to:
transmit a handover request message to a target base station;
receive a handover request ACK message including information on a identified target computing function (CF) from the target base station; and
based on the handover request ACK message, transfer the information on the target CF to a source CF which is associated with the source base station and corresponds to a data network name (DNN) associated with the target CF and related to distributed processing of application relocation of a user equipment (UE) performing handover.

15. The device of claim 14, wherein the controller is configured to perform control to connect the source CF to the target CF so as to transmit and receive a message including information for distributed processing of application relocation of the UE performing handover.
